# EUROPÄISCHE PATENTSCHRIFT

(11) **EP 3 014 756 B1**
(45) Veröffentlichungstag und Bekanntmachung des Hinweises auf die Patenterteilung: **12.12.2018**
(21) Anmeldenummer: 13732898.5
(22) Anmeldetag: 27.06.2013
(51) Int. Cl.: H02P 6/00

(54) **VERFAHREN ZUR ERKENNUNG EINER WINKELFEHLSTELLUNG EINES ELEKTRISCHEN MOTORS**
METHOD FOR DETECTING AN INCORRECT ANGULAR POSITION OF AN ELECTRIC MOTOR
PROCÉDÉ PERMETTANT DE DÉTECTER UNE MAUVAISE POSITION ANGULAIRE D'UN MOTEUR ÉLECTRIQUE

(43) Veröffentlichungstag der Anmeldung: 04.05.2016
(73) Patentinhaber: Continental Automotive GmbH, 30165 Hannover (DE)
(72) Erfinder: GUNSELMANN, Christian, 42113 Wuppertal (DE); FÖRSTER, Christoph, 65830 Kriftel (DE); SADER, Frank, 61462 Königstein (DE)
(86) Internationale Anmeldenummer: PCT/EP2013/063482
(87) Internationale Veröffentlichungsnummer: WO 2014/206468

(56) Entgegenhaltungen:
- JP-A- 2002 104 218
- JP-A- 2012 228 128
- US-A1- 2010 235 051

## Beschreibung

Die Erfindung betrifft ein Verfahren zur Erkennung einer Winkelfehlstellung einer Rotoreinrichtung zu einer Statoreinrichtung einer mit Wechselstrom betriebenen elektrischen Maschine sowie eine Vorrichtung zum Ausführen des erfindungsgemäßen Verfahrens und eine Lenkvorrichtung mit einer vorgenannten Vorrichtung.

Ein gravierender Fehler mittels elektrischer Motoren unterstützter Lenkungen von Kraftfahrzeugen besteht in der sogenannten "Selbstlenkung". In diesen Fällen erzeugt der Motor ohne entsprechenden Fahrerwunsch ein Drehmoment oder das erzeugte Drehmoment ist viel größer als die Anforderung des Fahrers, so dass eine unerwünschte Lenkung des Fahrzeugs entstehen kann.

Die Ursache für eine Selbstlenkung liegt unter anderem in der fehlerhaften Ermittlung des Rotorwinkels bzw. Motorwinkel, d. h. der Winkel des Rotors zu einem festen Bezugspunkt. Diese Fehler sind zwar sehr unwahrscheinlich, die Auswirkungen aber so gefährlich, dass eine Überwachung zwingend notwendig ist. Dabei werden erst Winkelfehler ab einer bestimmten Größe als gefährlich eingestuft, bspw. ab ca. 20° des elektrischen Motorwinkels. Eine vollständige elektrische Umdrehung um 360° entspricht dabei einer mechanischen Umdrehung von 360° des Rotors dividiert durch die Anzahl der Spulenpaare.

Bei einer Erkennung eines gefährlichen Winkelfehlers wird die Lenkunterstützung sofort abgeschaltet, um das System in einen sicheren Zustand der rein manuellen Lenkung zu überführen. Um in weniger kritischen Zuständen eine Abschaltung zu vermeiden, z. B. bei kleineren Winkelfehlern, kann die Lenkunterstützung auch reduziert werden.

Für die Motorwinkelmessung gibt es unterschiedliche Verfahren. Übliche Messungen erfolgen mittels magnetischer Sensoren, sogenannten Resolvern und einer Signalaufbereitung. Bei den bekannten Verfahren sind Fehlerquellen für Motorwinkelfehler an unterschiedlichen Stellen in der gesamten Wirkungskette zwischen Sensor, Resolver und Signalaufbereitung denkbar.

Eine Ursache kann beispielsweise im Bereich des Motors liegen, wenn z. B. der auf der Rotorwelle befestigte Winkelgeber nicht ordnungsgemäß befestigt ist und verrutscht und dadurch der Winkel zwischen dem Winkelgeber und der Rotorwelle sich verändert. Ursachen im Bereich des Sensors können z. B. durch Verzerrung des Magnetfeldes, durch metallische Fremdteile, durch Fehler im Sensorelement aufgrund eines Kurzschlusses, Kontaktbruches, Bauteildriftes, usw., durch Fehler in der analogen oder digitalen Signalverarbeitung oder durch eine inkorrekte Anordnung des Schaltkreises des Sensors auf der Trägerplatine gegeben sein. Die JP2012228128 offenbart eine Motorsteuerung eines Elektromotors mit drei Wicklungen und umfaßt eine Phasenstrommeßeinheit und Phasenspannungsmeßeinheit. **Aufgabe der Erfindung** ist es daher ein Verfahren aufzuzeigen, mittels dessen eine zuverlässige Überwachung des Rotorwinkels einer elektrischen Maschine umsetzbar ist.
Die Aufgabe wird gelöst mittels eines Verfahrens der eingangs genannten Art, wobei die elektrische Maschine mehrere Wicklungsstränge aufweist, wobei eine Steuervorrichtung zum Ermitteln von Phasenströmen in den Wicklungssträngen und / oder Phasenspannungen zwischen den Wicklungssträngen vorgesehen ist, aufweisend die Schritte:
a) Ermitteln mindestens eines der Phasenströme und / oder mindestens einer der Phasenspannungen,
b) Ermitteln mindestens einer Abweichung zwischen dem ermittelten Phasenstrom und einem dazu korrespondierenden Soll-Phasenstrom und / oder zwischen der ermittelten Phasenspannung und einer dazu korrespondierenden Soll-Phasenspannung, und
c) Erkennen eines Winkelfehlers, wenn eines der Abweichungen außerhalb eines Toleranzbereiches liegt.
Der Erfindung liegt der Grundgedanke zugrunde, dass der Motorwinkel eines der wichtigsten Eingangsgrößen für die Motorregelung ist und in einen Regelkreis zur Ansteuerung des Motors Eingang findet. Fehlerhafte Winkelinformationen, d. h. eine Abweichung zwischen dem vom Regler angenommenen und dem tatsächlichen Motorwinkel haben eine Ansteuerung des Motors zur Folge, die nicht auf den tatsächlichen Motorwinkel abgestimmt ist. Das hat zur Folge, dass der in den Motorwindungen fließende tatsächliche Phasenstrom sich von dem Soll-Phasenstrom unterscheidet, der von der Steuerungsvorrichtung vorgegeben wird. Bei solch einem Fehler kommt es zu einer Abweichung der Phasenströme in der Form, dass der Verlauf des tatsächlichen Phasenstroms von dem des Soll-Phasenstroms abweicht.

Im Schritt a) wird daher zu mindestens einer Phase der tatsächlich in den Motorwindungen fließende Phasenstrom und / oder zu mindestens einer Phase anliegende Phasenspannung ermittelt. Der Phasenstrom kann mittels eines Stromsensors direkt zurückgemessen oder über eine indirekt über die Phasenspannung ermittelt werden.

Im Schritt b) wird eine Abweichung zwischen dem tatsächlichen fließenden Phasenstrom und dem Soll-Phasenstrom der gleichen Phase ermittelt. Die Abweichung wird für mindestens eine Phase ermittelt.

Im Schritt c) erfolgt die Erkennung eines Winkelfehlers anhand der Bewertung mindestens einer Abweichung zwischen dem Phasenstrom bzw. Phasenspannung und dem Soll-Phasenstrom und bzw. der Soll-Phasenspannung. Jede ermittelte Abweichung muss innerhalb eines Toleranzbereiches liegen. Andernfalls wird ein Winkelfehler erkannt.

Alternativ erfolgt die Erkennung des Winkelfehlers nach einer Entprellung. D. h. es wird ein Winkelfehler dann erkannt, wenn die Abweichung in einer vorbestimmten Häufigkeit außerhalb des Toleranzbereiches liegt. Dabei kann die Häufigkeit in aufeinanderfolgender Weise gezählt werden oder es kann die Häufigkeit der Toleranzüberschreitungen innerhalb einer bestimmten Anzahl von Perioden ermittelt werden.

Die Verfahrensschritte werden in jeder Periode einer Phase und laufend während des Betriebs der elektrischen Maschine ausgeführt. Im Falle eines permanenterregten Synchronmotors werden die Schritte a) bis c) für mindestens eines der Phasen U, V, W durchgeführt.

Das erfindungsgemäße Verfahren wird vorteilhafterweise weitergebildet durch
a) Ermitteln der Phasenströme und / oder der Phasenspannungen,
b) Ermitteln der Abweichungen zwischen den ermittelten Phasenströmen und den jeweils dazu korrespondierenden Soll-Phasenströmen und / oder zwischen den ermittelten Phasenspannungen und den dazu korrespondierenden Soll-Phasenspannungen, und
c) Erkennen einer Winkelfehlstellung, wenn die Abweichungen außerhalb eines Toleranzbereiches liegen.

Auf diese Weise erfolgt die Überprüfung aller Phasenströme bzw. Phasenspannungen auf eine mögliche Abweichung hin, um die Zuverlässigkeit der Winkelfehlererkennung zu erhöhen.

Das erfindungsgemäße Verfahren wird vorteilhafterweise dadurch weitergebildet, dass die Abweichung anhand einer Phasenverschiebung zwischen dem Phasenstrom und dem dazu korrespondierenden Soll-Phasenstrom ermittelt wird. Die Phasenverschiebung wird in Bezug auf den elektrischen Motorwinkel gemessen.

Das erfindungsgemäße Verfahren wird vorteilhafterweise dadurch weitergebildet, dass die Phasenverschiebung im Moment eines Richtungswechsel des Phasenstroms und des Soll-Phasenstroms ermittelt wird.

Das erfindungsgemäße Verfahren wird vorteilhafterweise dadurch weitergebildet, dass der Richtungswechsel des Phasenstroms mittels der Phasenspannung derselben Phase bestimmt wird.

Das erfindungsgemäße Verfahren wird vorteilhafterweise dadurch weitergebildet, dass die Phasenspannung mittels Raumvektormodulation einem Sektor aus einer elektrischen Umdrehung der elektrischen Maschine zuordnenbar ist, wobei die Abweichung mittels des Abstandes der Sektorwechsel zwischen der Phasenspannung und der Soll-Phasenspannung bestimmt wird.

Das erfindungsgemäße Verfahren wird vorteilhafterweise dadurch weitergebildet, dass die Abweichungen über einen vordefinierten Zeitraum gemittelt werden und ein Winkelfehler erkannt wird, wenn das Mittel der Abweichungen außerhalb eines Toleranzbereiches liegt.

Vorzugsweise werden die Phasenverschiebungen zwischen den Sektorwechsel der Phasenspannungen und Sollphasenspannungen während einer elektrischen Umdrehung des Motors ermittelt und gemittelt. Hierzu können die Beträge der Phasenverschiebungen addiert und durch die Anzahl der Sektorwechsel, i. d. R. durch sechs Sektorwechseln, dividiert werden.

Mittels der vorgenannten Weiterbildungen ist das Verfahren ohne die direkte Messung des Phasenstroms möglich, so dass das Verfahren kostengünstig ohne die Verwendung eines Stromsensors umsetzbar ist. Insbesondere für Anwendungsfälle mit hohen Strömen ist diese Weiterbildung besonders vorteilhaft.

Das erfindungsgemäße Verfahren wird vorteilhafterweise dadurch weitergebildet, dass die Steuerungsvorrichtung zum Minimieren der Abweichung einen von der Soll-Phasenstrom und Soll-Phasenspannung abweichenden Kompensations-Phasenstrom und Kompensations-Phasenspannung bestimmt, wobei ein Winkelfehler erkannt wird, sobald der Kompensations-Phasenstrom und / oder Kompensations-Phasenstrom in von dem Soll-Phasenstrom oder der Soll-Phasenspannung über einen Schwellenwert hinaus abweicht. Der Kompensations-Strom bzw. die Kompensations-Spannung sind weitere Eingangsgrößen zur Steuerung der elektrischen Maschine, um die Abweichung zwischen dem tatsächlichen Phasenstrom bzw. Phasenspannung zu dem Soll-Phasenstrom bzw. der Soll-Phasenspannung zu verringern.

Über die Größen des Kompensationsstroms bzw. der Kompensations-Spannung ist es möglich ein Rückschluss auf einen möglichen Winkelfehler zu schließen. Auf diese Wiese kann die Erkennung eines möglichen Winkelfehlers mit erhöhter Zuverlässigkeit und Genauigkeit erfolgen.

Das erfindungsgemäße Verfahren wird vorteilhafterweise dadurch weitergebildet, dass die elektrische Maschine eine Sensorvorrichtung zum Messen der Winkelstellung der Rotoreinrichtung zur Statoreinrichtung aufweist, wobei die Winkelfehlstellung mittels der Sensorvorrichtung und der Phasendifferenz ermittelt wird.

Das erfindungsgemäße Verfahren wird vorteilhafterweise dadurch weitergebildet, dass die Sensorvorrichtung ein Messsignal und ein Referenzsignal erzeugt, wobei eine Winkelfehlstellung erkannt wird, wenn die Phasendifferenz einen Schwellenwert überschreitet und die Abweichung zwischen dem Messsignal zu dem Referenzsignal innerhalb eines Toleranzbereiches liegt. Die zwischen dem Mess- und Referenzssignal gemessenen Winkelwerte sind um 90° zueinander verschoben und ermöglichen die Überprüfung der Sensormessungen mithilfe einer trigonometrischen Formel.

Mittels dieser Weiterbildungen wird ein Winkelfehler erst dann erkannt, wenn ein Fehler in der Sensorvorrichtung ausgeschlossen werden kann. Auf diese Weise ist eine besonders genaue Ermittlung der Ursache der Winkelfehlstellung möglich. Hierfür wird geprüft, dass die Abweichung zwischen den redundanten Sensorsignalen nicht über einen Toleranzbereich hinausgeht. Andernfalls kann aufgrund der Abweichung festgestellt werden, dass die Ursache in der von dem Sensor gemeldeten Winkelfehlstellung beim Sensor selbst liegt. Des Weiteren ist diese Weiterbildung besonders vorteilhaft, weil ein Fehler im Sensor über den Vergleich der redundanten Single besonders schnell erfolgt und daher entsprechende Maßnahmen auch schnell ergriffen werden können.

Das erfindungsgemäße Verfahren wird vorteilhafterweise weitergebildet durch
d) Abschalten der elektrischen Maschine oder Umschalten in einen Notbetrieb, sobald eine Winkelfehlstellung erkannt wird.

Der Notbetrieb kann beispielsweise einen Betrieb der elektrischen Maschine mit einem geringeren Lastmoment umfassen. Im Falle einer Lenkhilfe könnte die elektrische Maschine dann im Notbetrieb eine Minimalunterstützung der Lenkung bereitstellen.

Die Aufgabe wird ferner gelöst gemäß einem zweiten Aspekt der Erfindung betreffend eine Vorrichtung zum Ausführen der Verfahren nach einem der vorstehenden Ausführungsformen.

Die erfindungsgemäße Vorrichtung wird dadurch vorteilhafterweise weitergebildet, dass es eine Sensorvorrichtung zum Messen der Winkelstellung der Rotoreinrichtung zur Statoreinrichtung aufweist, wobei die Sensorvorrichtung ein Messsignal und ein Referenzsignal erzeugt.

Die erfindungsgemäße Vorrichtung wird dadurch vorteilhafterweise weitergebildet, dass die Steuervorrichtung einen Mikrocontroller, eine Gate-Drive-Unit, eine Schaltungsanordnung mit drei Halbbrücken und eine Messeinrichtung zum Messen der Phasenspannungen zwischen den Wicklungssträngen aufweist.

Ferner umfasst die Erfindung einen dritten Aspekt betreffend eine Lenkhilfe für ein Kraftfahrzeug mit einer Vorrichtung nach den vorgenannten Ausführungsformen.

Weitere bevorzugte Ausführungsformen ergeben sich aus der nachfolgenden Beschreibung eines Ausführungsbeispiels anhand von Figuren.

Es zeigen
- Fig. 1: eine Vorrichtung zum Ausführung des erfindungsgemäßen Verfahrens,
- Fig. 2a: eine schematische Darstellung einer ersten Variante des Microcontrollers aus Figur 1,
- Fig. 2b: eine schematische Darstellung einer zweiten Variante des Microcontrollers aus Figur 1,
- Fig. 3: einen beispielhaften Verlauf des Phasenstroms und des Soll-Phasenstroms, und

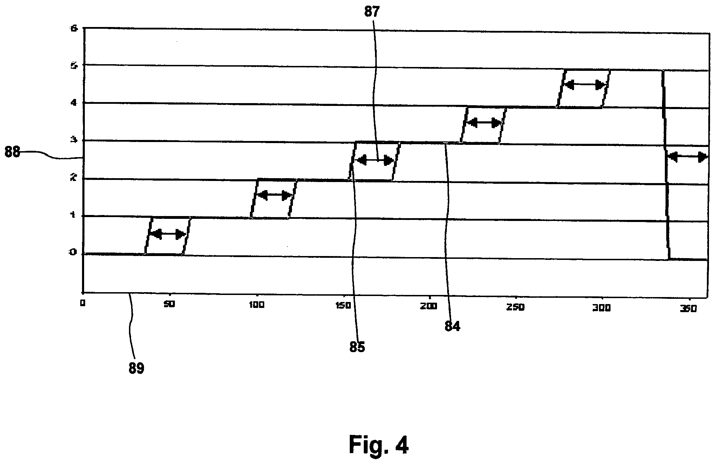

- Fig. 4: einen beispielhaften Verlauf der Phasenspannung und der Soll-Phasenspannung.

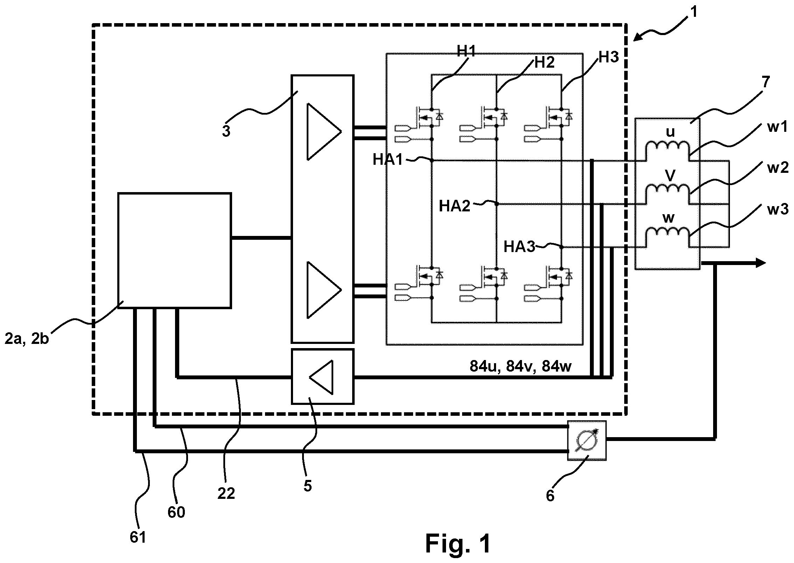

Figur 1 zeigt einen schematischen Aufbau einer Vorrichtung zum Ausführen des Erfindungsgemäßen Verfahrens.

Die Vorrichtung weist eine Steuervorrichtung 1 mit einem Mikrocontroller 2a, 2b, einer Gate Drive Unit 3, einer Leistungsendstufe 4 in Form einer Schaltungsanordnung mit drei Halbbrücken H1, H2, H3 und einer Messeinrichtung 5 zum Messen der Phasenspannungen zwischen den Wicklungssträngen auf. Über die Leistungsendstufe 4 ist die Steuervorrichtung 1 mit der elektrischen Maschine 7 elektrisch verbunden. Ferner ist eine Sensorvorrichtung 6, ausgebildet als Drehwinkelsensor, zum Messen der Winkelstellung der Rotoreinrichtung zur Statoreinrichtung vorgesehen, wobei die Sensorvorrichtung 6 ein Messsignal und ein Referenzsignal erzeugt und diese Signale an den Mikrocontroller überträgt.

In der Steuervorrichtung 1 ist der Mikrocontroller 2a, 2b mit der Gate Drive Unit 3 elektrisch Verbunden. Die Gate Drive Unit 3 ist mit der Leistungsendstufe 4 elektrisch Verbunden. Die Leistungsendstufe 4 weist drei Halbbrücken H1, H2, H3 auf, die jeweils über einen Anschlusspunkt HA1, HA2, HA3 mit einem Wicklungsstrang W1, W2, W3 der elektrischen Maschine 7 elektrisch Verbunden sind. Die Messeinrichtung 5 ist jeweils mit den Leitungen verbunden, die zwischen den Anschlusspunkten HA1, HA2, HA2 und den Wicklungssträngen W1, W2, W3 verlaufen, und erfasst die zwischen den Wicklungssträngen W1, W2, W3 anliegenden Phasenspannungen U, V, W. Alternativ kann anstatt der Messeinrichtung 5 ein Stromsensor verwendet werden, der hier nicht dargestellt ist. Sowohl die Messeinrichtung 5 als auch der Drehwinkelsensor 6 übermitteln ihre Daten an den Mikrocontroller 2.

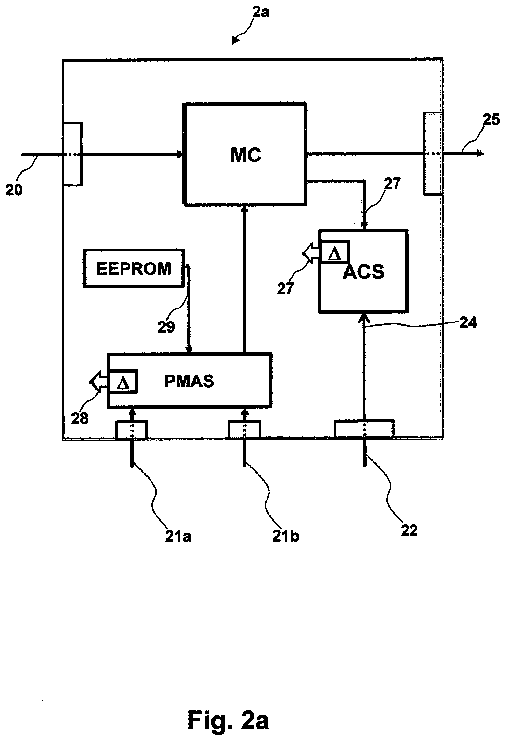

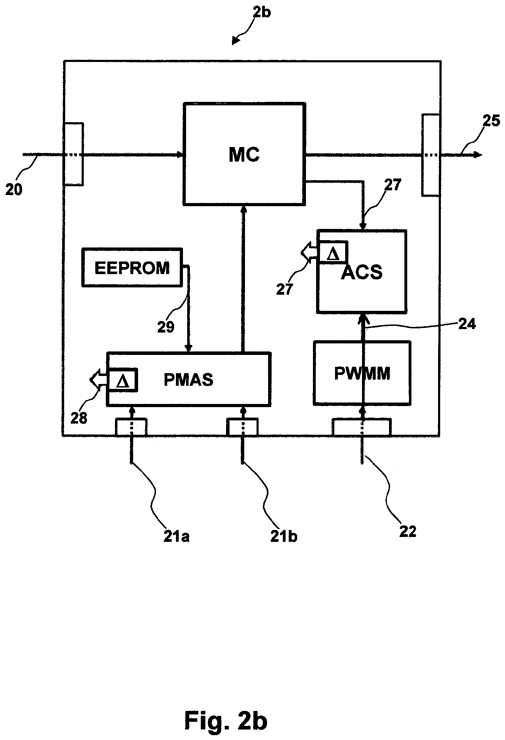

Die Figuren 2a und 2b zeigen einen schematischen Aufbau des Mikrocontrollers 2a, 2b in zwei unterschiedlichen Varianten.

Beide Varianten weisen einen ersten Eingang 20 auf, über die das zum Fahrerwunsch korrespondierende Drehmomentsignal eingeht. Des Weiteren gibt es zwei Eingänge 21a, 21b zum Erfassen der vom Drehwinkelsensor 6 übertragenen Signale. Der Eingang 21a erfasst das Referenzsignal. Der Eingang 21b erfasst das Nutzsignal. In diesem Ausführungsbeispiel liegt das Referenzsignal in analoger und das Nutzsignal in digitaler Form vor. Ein weiterer Eingang 22 ist zum Erfassen der tatsächlichen Phasenströme 80u, 80v, 80w bzw. der Phasenspannungen 84u, 84v, 84w vorgesehen.

Figur 2a zeigt eine erste Variante des Mikrocontrollers 2a der Phasenströme 80u, 80v, 80w. In Figur 2b ist eine Variante des Mikrocontrollers 2b gezeigt, der zum Erfassen der Phasenspannungen 84u, 84v, 84w ausgelegt ist und dafür eine zusätzliche Signalverarbeitungseinheit PWMM aufweist. Denkbar ist ferner eine Ausführung, bei der sowohl die Phasenströme 80u, 80v, 80w als auch die Phasenspannungen 84u, 84v, 84w erfasst werden.

Die Mikrocontroller 2a, 2b weisen ferner einen Ausgang 25 auf, über die die pulsweiten modulierten Signale für den Stromfluss an die Gate Drive Unit 3 übertragen werden.

Das erfindungsgemäße Verfahren kann grundsätzlich auf zwei unterschiedliche Weisen ausgeführt werden. Zunächst wird der Ablauf des Verfahrens anhand der Variante aus Figur 2a näher erläutert.

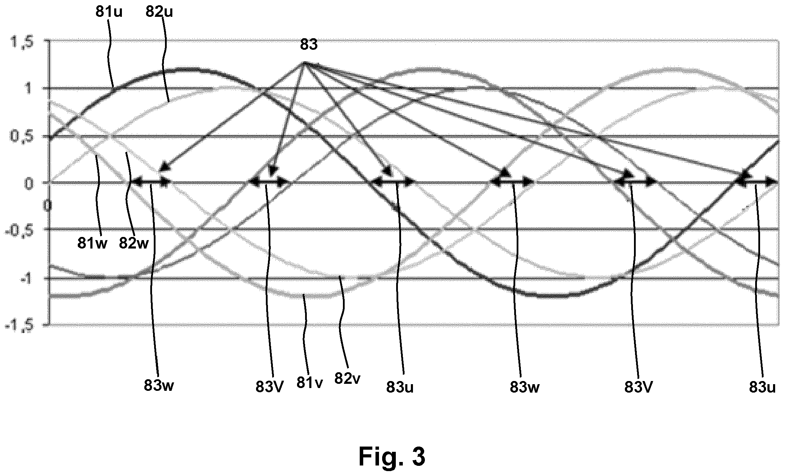

Zunächst werden die Phasenströme 80u, 80v, 80w mittels des Stromsensors ermittelt und an den eine Auswerteeinheit ACS des Mikrocontrollers 2a übermittelt. Anschließend werden die erfassten Phasenströme 80u, 80v, 80w mittels der Auswerteeinheit ACS ausgewertet. Hierzu werden die Abweichungen zwischen den ermittelten Phasenströmen und eines der Phase zugeordneten Soll-Phasenströmen 82u, 82v, 82w bzw. die in den Wicklungssträngen U, V, W fließenden Ströme durch Messung oder Berechnung anhand der Phasenspannungen 84u, 84v, 84w ermittelt. Eine Steuereinheit MC übermittelt die Soll-Phasenströme 82u, 82v, 82w an die Auswerteeinheit ACS über den Eingang 23. Die Auswerteeinheit ACS ermittelt die jeweiligen Phasenverschiebungen 83u, 83v, 83w (s. Figur 3) zwischen den tatsächlichen Phasenströmen 80u, 80v, 80w und den Soll-Phasenströmen 82u, 82v, 82w. Vorzugsweise werden die Phasenverschiebungen 83u, 83v, 83w beim Nulldurchgang bzw. beim Richtungswechsel der Ströme ermittelt. Es wird mittels der Auswerteeinheit ACS eine Winkelfehlstellung erkannt, wenn die Abweichungen bzw. Phasenverschiebungen 83u, 83v, 83w der Phasenströme 80u, 80v, 80w außerhalb eines Toleranzbereiches liegen. Liegt so ein Fall vor, wird über den Ausgang 27 ein Winkelfehler ausgegeben.

Das erfindungsgemäße Verfahren läuft gemäß der Variante aus Figur 2b folgendermaßen ab:
Zunächst werden die Phasenspannungen 84u, 84v, 84w mittels der Phasenspannungsmesseinheit 5 ermittelt und an den Mikrocontroller übertragen. Die Phasenspannungen 84u, 84v, 84w entsprechen den Spannungen zwischen den Wicklungseinheiten U-V, U-W und V-W.

Die Phasenspannungen werden mittels einer Signalverarbeitungseinheit PWM durch Raumvektormodulation einem Sektor 88 aus einer elektrischen Umdrehung der elektrischen Maschine zugeordnet. Eine elektrische Umdrehung der elektrischen Maschine weist dabei sechs Sektoren auf. Es wird dabei festgestellt zu welchem Phasenwinkel 89, im Bereich von 0° bis 360°, der elektrischen Umdrehung des Motors ein Sektorwechsel stattgefunden hat. Der Phasenwinkel der Sektorwechsel der Phasenspannungen 84u, 84v, 84w wird von der Signalverarbeitungseinheit PWM an die Auswerteeinheit ACS über den Eingang 24 übertragen. Über den Eingang 23 erhält die Auswerteeinheit die Phasenwinkel, zu der die Soll-Phasenspannungen 85u, 85v, 85w die Sektorwechsel vollziehen sollen. Es wird die Abweichung bzw. Phasenverschiebung 87 zwischen den Sektorwechsel mittels der Auswerteeinheit ACS ermittelt. Die Auswerteeinheit ACS erkennt eine Winkelfehlstellung, wenn mindestens die Phasenverschiebungen zwischen den Sektorwechsel außerhalb eines Toleranzbereiches liegen. Alternativ ist es denkbar die Abweichungen 87 über einen vordefinierten Zeitraum zu mitteln und ein Winkelfehler zu identifizieren, wenn das Mittel der Abweichungen 87 außerhalb eines Toleranzbereiches liegt.

Alternativ dazu kann das Verfahren derart ausgeführt werden, dass die Richtungswechsel der Phasenströme 80u, 80v, 80w mittels der Sektorwechsel der Phasenspannungen 84u, 84v, 84w ermittelt werden. Anschließend die Phasenverschiebung zwischen den Phasenströmen 80u, 80v, 80w und den Soll-Phasenströmen 82u, 82v, 82w anhand der Richtungswechsel der Phasen- 80u, 80v, 80w und Soll-Phasenströme 82u, 82v, 82w ermittelt.

Das Verfahren kann dadurch weitergebildet werden, dass mittels der Steuereinheit MC zum Minimieren der Abweichung von den Soll-Phasenströmen und Soll-Phasenspannungen Kompensations-Phasenströme und Kompensations-Phasenspannungen bestimmt werden, wobei ein Winkelfehler erkannt wird, sobald die Kompensations-Phasenströme und / oder die Kompensations-Phasenspannungen einen Schwellenwert übersteigen.

Ferner können beide Varianten des Verfahrens dadurch ergänzt werden, dass mittels des Drehwinkelsensors 6 zusätzlich eine Winkelfehlstellung ermittelt wird. Insbesondere ist es vorteilhaft erst dann eine Winkelfehlstellung auszugeben, wenn die Abweichung zwischen dem Messsignal zu dem Referenzsignal innerhalb eines Toleranzbereiches liegt und auf diese Weise zunächst festgestellt wird, dass der Drehwinkelsensor 6 keinen Fehler aufweist. Hierzu weist der Mikrocontroller 2a, 2b eine zweite Auswerteeinheit PMAS auf, zu dem das Nutz- und Referenzsignal übermittelt wird und der diese beiden Signale abgleicht. Bei einer Abweichung zwischen dem Mess- und Referenzsignal über den Toleranzbereich hinaus, wird ein Fehler über den Ausgang 28 ausgegeben. Darüber hinaus ist die zweite Auswerteeinheit PMAS mit einer Speichereinheit, vorzugsweise ein EEPROM Speicherbaustein, elektrisch verbunden 29. Die Speichereinheit speichert die letzte Motorwinkelstellung vor Abschalten des Motors und übermittelt diese bei einer Wiederaufnahme des Betriebs.

Des Weiteren wird das Verfahren dadurch ergänzt, dass die elektrischen Maschine abgeschaltet oder in einen Notbetrieb umgeschaltet wird, sobald eine Winkelfehlstellung erkannt wird. Hierzu wird der Mikrocontroller 2a, 2b abgeschaltet oder es wird ein Notbetriebsprogramm mittels des Mikrocontrollers 2a, 2b gestartet.

## Patentansprüche

1. Verfahren zum Überprüfen eines Drehwinkels einer Rotoreinrichtung zu einer Statoreinrichtung einer mit Wechselstrom betriebenen elektrischen Maschine, die mehrere Wicklungsstränge aufweist, wobei eine Steuervorrichtung zum Ermitteln von Phasenströmen in den Wicklungssträngen und / oder Phasenspannungen zwischen den Wicklungssträngen vorgesehen ist, **gekennzeichnet durch**:
a) Ermitteln mindestens eines der Phasenströme und / oder mindestens einer der Phasenspannungen,
b) Ermitteln mindestens einer Abweichung zwischen dem ermittelten Phasenstrom und einem dazu korrespondierenden Soll-Phasenstrom und / oder zwischen der ermittelten Phasenspannung und einer dazu korrespondierenden Soll-Phasenspannung, und
c) Erkennen eines Winkelfehlers, wenn eine der Abweichungen außerhalb eines Toleranzbereiches liegt.

2. Verfahren nach Anspruch 1, **gekennzeichnet durch**
a) Ermitteln der Phasenströme und / oder der Phasenspannungen,
b) Ermitteln der Abweichungen zwischen den ermittelten Phasenströmen und den jeweils dazu korrespondierenden Soll-Phasenströmen und / oder zwischen den ermittelten Phasenspannungen und den dazu korrespondierenden Soll-Phasenspannungen, und
c) Erkennen eines Fehlers, wenn die Abweichungen außerhalb eines Toleranzbereiches liegen.

3. Verfahren nach einem der vorstehenden Ansprüche, **dadurch gekennzeichnet, dass** die Abweichung anhand einer Phasenverschiebung zwischen dem Phasenstrom und dem dazu korrespondierenden Soll-Phasenstrom ermittelt wird.

4. Verfahren nach dem vorstehenden Anspruch, **dadurch gekennzeichnet, dass** die Phasenverschiebung im Moment eines Richtungswechsel des Phasenstroms und des Soll-Phasenstroms ermittelt wird.

5. Verfahren nach einem der vorstehenden Ansprüche, **dadurch gekennzeichnet, dass** der Richtungswechsel des Phasenstroms mittels der Phasenspannung derselben Phase bestimmt wird.

6. Verfahren nach einem der vorstehenden Ansprüche, **dadurch gekennzeichnet, dass** die Phasenspannung mittels Raumvektormodulation einem Sektor aus einer elektrischen Umdrehung der elektrischen Maschine zugeordnet wird, wobei die Abweichung mittels des Abstandes der Sektorwechsel zwischen der Phasenspannung und der Soll-Phasenspannung bestimmt wird.

7. Verfahren nach einem der vorstehenden Ansprüche, **dadurch gekennzeichnet, dass** die Abweichungen über einen vordefinierten Zeitraum gemittelt werden und ein Winkelfehler erkannt wird, wenn das Mittel der Abweichungen außerhalb eines Toleranzbereiches liegt.

8. Verfahren nach einem der vorstehenden Ansprüche, **dadurch gekennzeichnet, dass** die Steuerungsvorrichtung zum Minimieren der Abweichung einen von der Soll-Phasenstrom und Soll-Phasenspannung abweichenden Kompensations-Phasenstrom und Kompensations-Phasenspannung bestimmt, wobei ein Winkelfehler erkannt wird, sobald der Kompensations-Phasenstrom und / oder Kompensations-Phasenstrom in von dem Soll-Phasenstrom oder der Soll-Phasenspannung über einen Schwellenwert hinaus abweicht.

9. Verfahren nach einem der vorstehenden Ansprüche, **gekennzeichnet durch** eine Sensorvorrichtung zum Messen der Winkelstellung der Rotoreinrichtung zur Statoreinrichtung, wobei die Winkelfehlstellung mittels der Sensorvorrichtung und der Phasendifferenz ermittelt wird.

10. Verfahren nach dem vorstehenden Anspruch, **dadurch gekennzeichnet, dass** die Sensorvorrichtung ein Messsignal und ein Referenzsignal erzeugt, wobei eine Winkelfehlstellung erkannt wird, wenn die Abweichung zwischen dem Messsignal zu dem Referenzsignal innerhalb eines Toleranzbereiches liegt.

11. Verfahren nach einem der vorstehenden Ansprüche, **gekennzeichnet durch**
d) Abschalten der elektrischen Maschine oder Umschalten in einen Notbetrieb, sobald eine Winkelfehlstellung erkannt wird.

12. Vorrichtung zum Überprüfen eines Drehwinkels einer Rotoreinrichtung zu einer Statoreinrichtung einer mit Wechselstrom betriebenen elektrischen Maschine, die mehrere Wicklungsstränge aufweist, wobei die Vorrichtung eine Steuervorrichtung zum Ermitteln von Phasenströmen in den Wicklungssträngen und / oder Phasenspannungen zwischen den Wicklungssträngen aufweist, **gekennzeichnet dadurch, daß** die Vorrichtung zum Ausführen des Verfahrens nach einem der Ansprüche 1 bis 11 ausgebildet ist.

13. Vorrichtung nach Anspruch 12, **gekennzeichnet durch** eine Sensorvorrichtung zum Messen der Winkelstellung der Rotoreinrichtung zur Statoreinrichtung, wobei die Sensorvorrichtung ein Messsignal und ein Referenzsignal erzeugt.

14. Vorrichtung nach einem der Ansprüche 12 und 13, **dadurch gekennzeichnet, dass** die Steuervorrichtung einen Mikrocontroller, eine Gate-Drive-Unit, eine Schaltungsanordnung mit drei Halbbrücken und eine Messeinrichtung zum Messen der Phasenspannungen zwischen den Wicklungssträngen aufweist.

15. Lenkhilfe für ein Kraftfahrzeug mit einer Vorrichtung nach einem der Ansprüche 12 bis 14.

## Claims

1. Method for checking an angle of rotation for a rotor device in relation to a stator device of an electric machine that is operated with alternating current and has a plurality of winding sections, wherein a control apparatus for ascertaining phase currents in the winding sections and/or phase voltages between the winding sections is provided, **characterized by**:
a) ascertainment of at least one of the phase currents and/or at least one of the phase voltages,
b) ascertainment of at least one discrepancy between the ascertained phase current and a corresponding setpoint phase current and/or between the ascertained phase voltage and a corresponding setpoint phase voltage, and
c) recognition of an angle error if one of the discrepancies is outside a tolerance range.

2. Method according to Claim 1, **characterized by**
a) ascertainment of the phase currents and/or the phase voltages,
b) ascertainment of the discrepancies between the ascertained phase currents and the respective corresponding setpoint phase currents and/or between the ascertained phase voltages and the corresponding setpoint phase voltages, and
c) recognition of an error if the discrepancies are outside a tolerance range.

3. Method according to either of the preceding claims, **characterized in that** the discrepancy is ascertained on the basis of a phase shift between the phase current and the corresponding setpoint phase current.

4. Method according to the preceding claim, **characterized in that** the phase shift is ascertained at the moment of a change of direction in the phase current and the setpoint phase current.

5. Method according to one of the preceding claims, **characterized in that** the change of direction in the phase current is determined by means of the phase voltage of the same phase.

6. Method according to one of the preceding claims, **characterized in that** the phase voltage is associated by means of space vector modulation with a sector from an electrical revolution of the electric machine, wherein the discrepancy is determined by means of the interval between the sector changes between the phase voltage and the setpoint phase voltage.

7. Method according to one of the preceding claims, **characterized in that** the discrepancies are averaged over a predefined period and an angle error is recognized if the average of the discrepancies is outside a tolerance range.

8. Method according to one of the preceding claims, **characterized in that** the control apparatus minimizes the discrepancy by determining a compensation phase current and compensation phase voltage that are different than the setpoint phase current and setpoint phase voltage, wherein an angle error is recognized as soon as the compensation phase current and/or compensation phase voltage is different than the setpoint phase current or the setpoint phase voltage by more than a threshold value.

9. Method according to one of the preceding claims, **characterized by** a sensor apparatus for measuring the angular position of the rotor device in relation to the stator device, wherein the angular position error is ascertained by means of the sensor apparatus and the phase difference.

10. Method according to the preceding claim, **characterized in that** the sensor apparatus produces a measurement signal and a reference signal, wherein an angular position error is recognized if the discrepancy between the measurement signal and the reference signal is within a tolerance range.

11. Method according to one of the preceding claims, **characterized by**
d) shutdown of the electric machine or changeover to an emergency mode as soon as an angular position error is recognized.

12. Apparatus for checking an angle of rotation for a rotor device in relation to a stator device of an electric machine that is operated with alternating current and has a plurality of winding sections, wherein the apparatus has a control apparatus for ascertaining phase currents in the winding sections and/or phase voltages between the winding sections, **characterized in that** the apparatus is designed for carrying out the method according to one of Claims 1 to 11.

13. Apparatus according to Claim 12, **characterized by** a sensor apparatus for measuring the angular position of the rotor device in relation to the stator device, wherein the sensor apparatus produces a measurement signal and a reference signal.

14. Apparatus according to either of Claims 12 and 13, **characterized in that** the control apparatus has a microcontroller, a gate drive unit, a circuit arrangement having three half-bridges and a measuring device for measuring the phase voltages between the winding sections.

15. Steering aid for a motor vehicle having an apparatus according to one of Claims 12 to 14.

## Revendications

1. Procédé de contrôle d'un angle de rotation d'un dispositif de rotor par rapport à un dispositif de stator d'une machine électrique fonctionnant au courant triphasé, laquelle possède plusieurs enroulements,
un arrangement de commande étant présent, destiné à déterminer des courants de phase dans les branches d'enroulement et/ou des tensions de phase entre les branches d'enroulement,
**caractérisé par**
a) détermination d'au moins l'un des courants de phase et/ou d'au moins l'une des tensions de phase,
b) détermination d'au moins un écart entre le courant de phase déterminé et un courant de phase de consigne correspondant à celui-ci et/ou entre la tension de phase déterminée et une tension de phase de consigne correspondant à celle-ci, et
c) reconnaissance d'une erreur d'angle lorsque les écarts se trouvent en-dehors d'une plage de tolérance.

2. Procédé selon la revendication 1, **caractérisé par**
a) détermination des courants de phase et/ou des tensions de phase,
b) détermination des écarts entre les courants de phase déterminés et les courants de phase de consigne respectifs correspondant à ceux-ci et/ou entre les tensions de phase déterminées et les tensions de phase de consigne correspondant à celles-ci, et
c) reconnaissance d'une erreur lorsque les écarts se trouvent en-dehors d'une plage de tolérance.

3. Procédé selon l'une des revendications précédentes, **caractérisé en ce que** l'écart est déterminé à l'aide d'un déphasage entre le courant de phase et le courant de phase de consigne correspondant à celui-ci.

4. Procédé selon la revendication précédente, **caractérisé en ce que** le déphasage est déterminé au moment d'un changement de direction du courant de phase et du courant de phase de consigne.

5. Procédé selon l'une des revendications précédentes, **caractérisé en ce que** le changement de direction du courant de phase est déterminé au moyen de la tension de phase de la même phase.

6. Procédé selon l'une des revendications précédentes, **caractérisé en ce que** la tension de phase est associée par modulation de vecteur spatial à un secteur constitué d'une rotation électrique de la machine électrique, l'écart étant déterminé au moyen de la distance du changement de secteur entre la tension de phase et la tension de phase de consigne.

7. Procédé selon l'une des revendications précédentes, **caractérisé en ce que** la moyenne des écarts est calculée sur une période prédéfinie et une erreur d'angle est reconnue lorsque la moyenne des écarts se trouve en-dehors d'une plage de tolérance.

8. Procédé selon l'une des revendications précédentes, **caractérisé en ce que** l'arrangement de commande, en vue de minimiser l'écart, détermine un courant de phase de compensation et une tension de phase de compensation différents du courant de phase de consigne et de la tension de phase de consigne, une erreur d'angle étant reconnue dès que le courant de phase de compensation et/ou la tension de phase de compensation s'écartent de plus d'une valeur de seuil du courant de phase de consigne ou de la tension de phase de consigne.

9. Procédé selon l'une des revendications précédentes, **caractérisé par** un arrangement de capteur destiné à mesurer la position angulaire du dispositif de rotor par rapport au dispositif de stator, la position angulaire erronée étant déterminée au moyen de l'arrangement de capteur et de la différence de phase.

10. Procédé selon la revendication précédente, **caractérisé en ce que** l'arrangement de capteur génère un signal de mesure et un signal de référence, une position angulaire erronée étant reconnue lorsque l'écart entre le signal de mesure et le signal de référence se trouve à l'intérieur d'une plage de tolérance.

11. Procédé selon l'une des revendications précédentes, **caractérisé par**
d) mise hors circuit de la machine électrique ou permutation dans un fonctionnement de secours dès qu'une position angulaire erronée est reconnue.

12. Arrangement de contrôle d'un angle de rotation d'un dispositif de rotor par rapport à un dispositif de stator d'une machine électrique fonctionnant au courant triphasé, laquelle possède plusieurs enroulements, l'arrangement possédant un arrangement de commande destiné à déterminer des courants de phase dans les branches d'enroulement et/ou des tensions de phase entre les branches d'enroulement,
**caractérisé en ce que** l'arrangement est configuré pour mettre en oeuvre le procédé selon l'une des revendications 1 à 11.

13. Arrangement selon la revendication 12, **caractérisé par** un arrangement de capteur destiné à mesurer la position angulaire du dispositif de rotor par rapport au dispositif de stator, l'arrangement de capteur générant un signal de mesure et un signal de référence.

14. Arrangement selon l'une des revendications 12 et 13, **caractérisé en ce que** l'arrangement de commande possède un microcontrôleur, une unité d'attaque de gâchette, un agencement de circuit comportant trois demi-ponts et un dispositif de mesure destiné à mesurer les tensions de phase entre les branches d'enroulement.

15. Assistance de direction pour véhicule automobile comprenant un arrangement selon l'une des revendications 12 à 14.
